# EUROPÄISCHE PATENTSCHRIFT

(11) **EP 0 703 354 B1**
(45) Veröffentlichungstag und Bekanntmachung des Hinweises auf die Patenterteilung: **01.12.1999**
(21) Anmeldenummer: 95113734.8
(22) Anmeldetag: 01.09.1995
(51) Int. Cl.: F01N 3/28

(54) **Verfahren zur Herstellung von Katalysatoren, insbesondere Mittelstücken von Kraftfahrzeug-Katalysatoren in Modulbauweise**
Manufacturing method of catalytic converters, especially middle sections of vehicle catalytic converters in modular construction
Méthode de fabrication des catalyseurs, en particulier des sections centrales des catalyseurs de véhicules en construction modulaire

(30) Priorität: 23.09.1994 DE 4433974
(43) Veröffentlichungstag der Anmeldung: 27.03.1996
(73) Patentinhaber: J. Eberspächer GmbH & Co., 73730 Esslingen (DE)
(72) Erfinder: Wirth, Georg, D-73230 Kirchheim (DE); Wörner, Siegfried, D-73734 Esslingen (DE); Hoffmann, Klaus, D-66564 Ottweiler (DE)

(56) Entgegenhaltungen:
- EP-A- 0 681 095
- US-A- 4 750 251
- PATENT ABSTRACTS OF JAPAN vol. 017, no. 172 (M-1392), 2.April 1993 & JP-A-04 332606 (NIPPON STEEL CORP), 19.November 1992,

## Beschreibung

Die Erfindung betrifft ein Verfahren zur Herstellung von Katalysatoren, insbesondere Mittelstücken von Kraftfahrzeug-Katalysatoren in Modulbauweise, durch Einschieben von Monolithen und umgebendem Lagermantel in vorgefertigte Rohre, welche im Querschnitt im wesentlichen das Monolithprofil plus Aufmaß für den Lagermantel aufweisen.

Es hat sich gezeigt, daß das Einbetten von hoch empfindlichen Monolithen mit umgebender Quellmatte in vorgefertigten Rohren für einen optimalen paßgenauen Sitz im Betrieb eines Katalysators problematisch ist aufgrund der vorgefertigten Monolithe, welche naturgemäß Form- und Maßabweichungen aufweisen können, wie auch die vorgefertigten Rohre Form- und Maßabweichungen enthalten können. So kann bei größeren Fertigungstoleranzen ein zu strenger, aber auch ein zu loser Sitz des Monoliths nebst Quellmatte im Rohrgehäuse bei Betrieb eines Katalysators entstehen. Beides ist unerwünscht. Ein zu strenger Sitz kann zu einem Bruch des hoch empfindlichen Monoliths bei der Montage oder bei Schlägen auf das Teil (Aufsetzen am Fahrzeug) führen, insbesondere dann, wenn es ein Dünnwandprodukt aus Keramik ist. Ein zu loser Sitz ist gleichbedeutend mit einer schlechten Lagerung und führt u.a. zu einem Verschieben und Zerschlagen des Monoliths unter Betriebsbelastungen (Vibrationen, Abgaspulsation) im Stahlmantel sowie zu einem aggressiven, nicht hinzunehmenden Körperschallverhalten (Anschlagen des losen Körpers an Metall).

Aufgabe der Erfindung ist die Schaffung eines Katalysator-Herstellungsverfahrens der eingangs genannten Art, welches einen optimalen Paßsitz eines oder mehrerer Monolithe in einem Schutzrohr mit Hilfe einfacher Mittel ermöglicht.

Gelöst wird die der Erfindung zugrundeliegende Aufgabe durch die im Anspruch 1 angegebenen Mittel.

Anspruch 1 erfüllt im Vergleich zum Dokument DE 4415160 (Prioritätsdokument der EP-A-0 681 095) die Anforderung der Neuheit gemäß Artikel 54 EPÜ und ist auch im Vergleich zum sonstigen eingangs genannten allgemein bekannten Stand der Technik neu und auch nicht in naheliegender Weise vorgegeben.

Vorteilhaft weitergebildet wird der Erfindungsgegenstand durch die Merkmale der Ansprüche 2 bis 14.

Erfindungsgemäß erfolgt also die Anpassung der Rohrmaße auf einen vorgegebenen exakten, d.h. konstanten Spalt zum Monolith durch Aufkalibrieren der im Querschnitt kleiner vorgefertigten Rohre. Zur Anpassung der Rohrmaße benötigt man die Monolithmaße, um einen konstanten Spalt definieren zu können. Diese erhält man durch Übernahme der Monolithmaße aus der Qualitätssicherung bei der Basisherstellung der Monolithe, bei der ohnehin die einzelnen Teile bis zu 100 % vermessen werden.

Die Daten des Monoliths werden unverwechselbar und sicher dann gespeichert, wenn gemäß einer vorteilhaften Weiterbildung der Erfindung diese schon bei der Qualitätssicherung in der Basisfertigung als sichtbare oder zumindest registrierbare individuelle Kennung auf den einzelnen Monolithen an geeigneter Stelle aufgebracht werden.

Die individuelle Kennung kann hierbei auf einer nicht beschichteten äußeren Umfangsfläche des Monoliths eingetragen werden.

Die individuelle Kennung kann aber auch am stirnseitigen Eintritt oder am (später beschichteten) Umfang des Monolithkörpers eingefräst sein, wobei die Kennung deutlich tiefer als die Stärke der Beschichtung (washcoat, Edelmetall) ist, so daß die Kennung auch nach der Beschichtung noch erkannt werden kann.

Eine vorteilhafte Weiterbildung der Erfindung sieht vor, daß die individuelle Kennung als Strichcode oder als frei wählbarer Code aufgestempelt oder mit einem Laser eingebrannt wird

Besonders zweckmäßig ist es, wenn die individuelle Kennung automatisch z.B. über Strichcodeleser oder Videobildverarbeitung abgelesen wird und insbesondere automatisch einer Kalibrierpresse eingegeben und in dieser verarbeitet wird, wozu insbesondere verstellbare Kalibrierdorne Verwendung finden, welche das Aufkalibriermaß der vorgefertigten Rohre festlegen.

Auch können alternativ feste Kalibrierdorne Verwendung finden, durch die das Aufkalibrieren der Rohre erfolgt. Hierzu werden die Monolithmaße in insbesondere drei Größenklassen eingeordnet und die zugehörigen Kalibrierdorne jeweils in die Kalibrierpresse eingesetzt, bevor mit dem Aufweiten der Rohre begonnen wird.

Eine besonders zweckmäßige Weiterbildung des erfindungsgemäßen Rohranpassungsverfahrens kennzeichnet sich dadurch, daß eine Monolithform-Abweichung (insbesondere außerhalb einer vorgegebenen Fertigungstoleranz) nicht etwa Grund für eine Ausschußware ist, sondern durch entsprechendes unsymmetrisches Kalibrieren am Rohrgehäuse nachgeführt wird. Es werden also Fehler in der Herstellung des Monoliths dadurch behoben, daß das aufkalibrierte Rohr dann den gleichen "Fehler" enthält, d.h. der zwischen Rohr und Monolith vorhandene Umfangsspalt nach wie vor konstante Spaltbreite besitzt.

Durch die Erfindung können also Vorfertigungsungenauigkeiten des Monoliths, des Rohres, sowie des zwischengeordneten Lagermantels, vorzugsweise Quellmatte, aber auch Drahtgestrick, grundsätzlich mit verblüffend einfachen Mitteln ausgeglichen werden. Von Vorteil insbesondere ist, daß bei einem Modulkatalysator eine individuelle Abstimmung der Lagerstelle und der Quellmattenpressung auf den Monolith erfolgen und dadurch auf spezielle Einsatzbedingungen und Wünsche des Anwenders eingegangen werden kann. Es können auch verschieden dicke Quellmatten bei Monolithen selbst mit großen Maß- und Formabweichungen verbaut werden, was mit Kostenvorteilen in der Fertigung einhergeht.

Von Vorteil ist ferner, daß Spalt- und damit auch Pressungsschwankungen am Umfang verringert werden können, wodurch auch ein Einsatz von Monolithen mit geringeren Druckfestigkeitsreserven (Dünnwandprodukte aus Keramik) ermöglicht wird.

Prinzipiell lassen sich durch die Erfindung gleichmäßige Spalte leichter als an Halbschalen- oder Wickel-Katalysatoren einstellen, da die Reibung zwischen Monolith, Quellmatte und Rohrgehäuse der Zentrierung nicht entgegensteht (Zentrierungsrichtung und Kraftrichtung bei der Montage stehen senkrecht aufeinander).

Die Erfindung wird nachfolgend anhand der Zeichnung näher beschrieben; es zeigen:
- Fig. 1: eine Übersicht in perspektischer Darstellung zwecks Erläuterung des erfingungsgemäßen Herstellungsverfahrens,

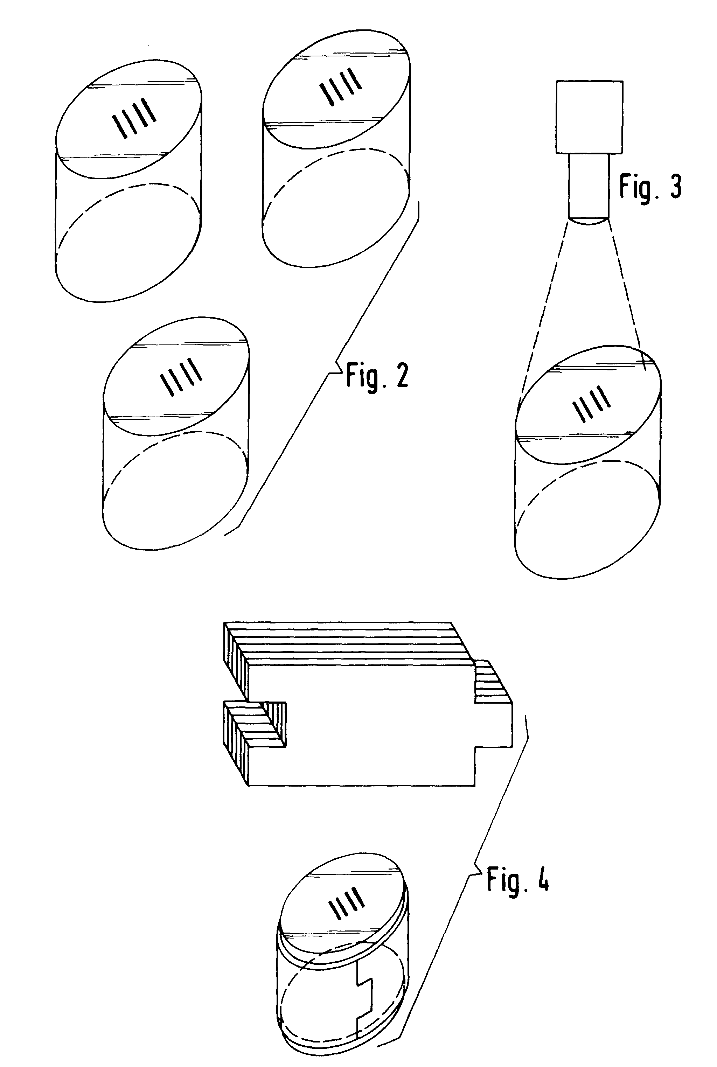

- Fig. 2: die Einzelheit A der Fig. 1, nämlich gekennzeichnete Monolithe,
- Fig. 3: die Einzelheit B der Fig. 1, nämlich Ablesen der individuellen Kennung,
- Fig. 4: die Einzelheit C der Fig. 1, nämlich Montage der Quellmatte,
- Fig. 5: die Einzelheit D der Fig. 1, nämlich Modulrohre mit Untermaß,
- Fig. 6: die Einzelheit E der Fig. 1, nämlich Aufkalibrieren der Rohre entsprechend dem abgelesenen Monolithmaß und der Spaltvorgabe,
- Fig. 7: die Einzelheit F der Fig. 1, nämlich Einschieben von Monolith mit Quellmatte in das kalibrierte Rohrgehäuse, und
- Fig. 8: die Einzelheit G der Fig. 1, nämlich fertige Modulrohre.

Die in der Zeichnung dargestellten Teile betreffen ein Mittelstück 1 eines nicht näher interessierenden Kraftfahrzeug-Katalysators in Modulbauweise, d.h. ein Mittelstück 1 mit einem Gehäuse in Form eines geradlinigen Rohrs, welches im Ausführungsbeispiel der Zeichnung einen ovalen Querschnitt aufweist. Das Mittelstück 1 ist ein Katalysator-Modul, dem sich jeweils an den Axialenden weitere, anders ausgebildete Katalysator-Module anschließen.

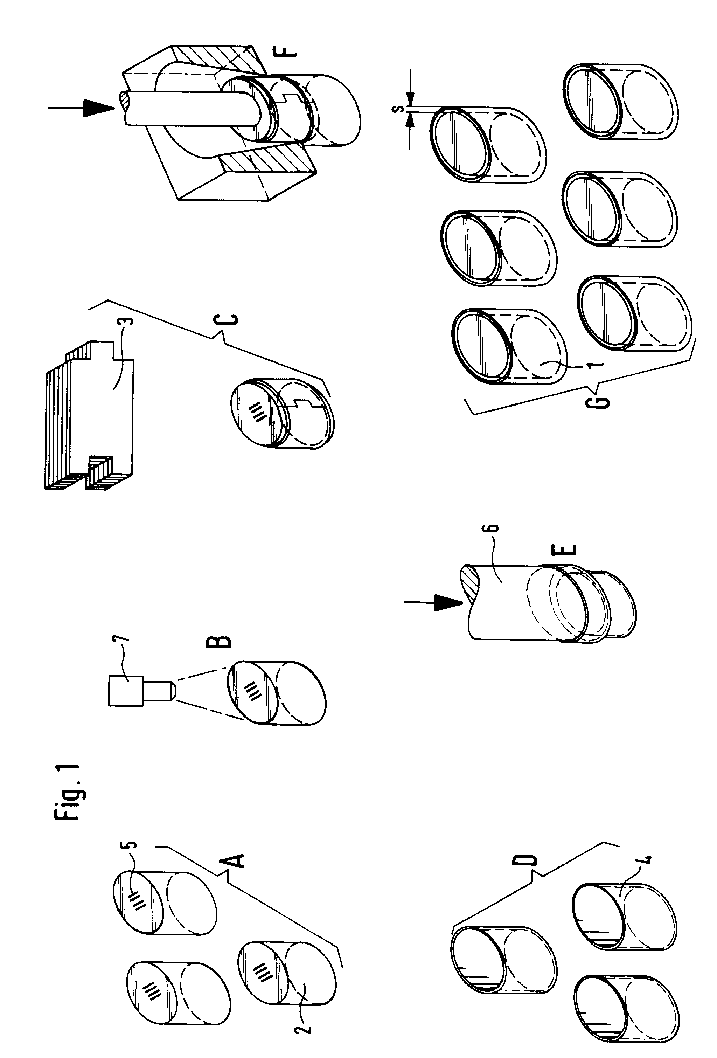

Das Mittelstück 1 umfaßt einen Monolith 2 in Zylinderform, bei welchem gemäß Fig. 1 auf der oberen Stirnseite eine individuelle Kennung 5 aufgebracht, z.B. aufgestempelt oder eingefräst, ist.

Die individuelle Kennung 5 sind die dem Monolith 2 eigenen Maße, Monolith-Formangaben, Monolith-Formabweichungen oder andere Kennzeichnungsgrößen, die ausschließlich diesen Monolith 2 betreffen. Die individuelle Kennung 2, z.B. ein Strichcode, ist sichtbar oder zumindest für einen Leseautomaten, z.B. Strichcodeleser, registrier- oder fühlbar angebracht, kann also auch nach einem Beschichten des Monoliths (washcoat und Edelmetall) noch erkannt werden.

Die individuelle Kennung 5 wird bereits bei der Monolith-Vorfertigung im Rahmen der Endkontrolle zur Qualitätssicherung des Halbteils festgestellt und unverwechselbar mit diesem verbunden.

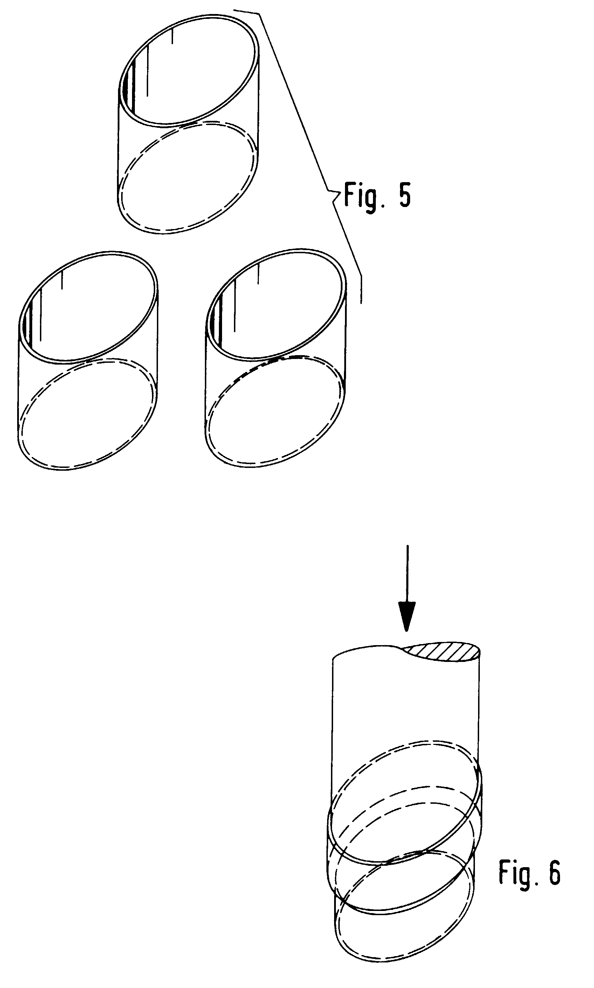

Nicht nur der Monolith 2, auch das Gehäuse in Rohrform wird vorgefertigt, und zwar in Form eines Rohrs 4 mit Untermaß, wie dies der Fig. 5 zu entnehmen ist. Das Rohr 4 weist also im vorgefertigten Zustand des Halbteils einen Durchmesser auf, der kleiner als der Durchmesser des Monoliths plus Aufmaß für eine Quellmatte 3 ist, welche gemäß Fig. 4 um den Umfang des Monoliths 5 gelegt und beispielsweise mit einem Klebeband gesichert wird.

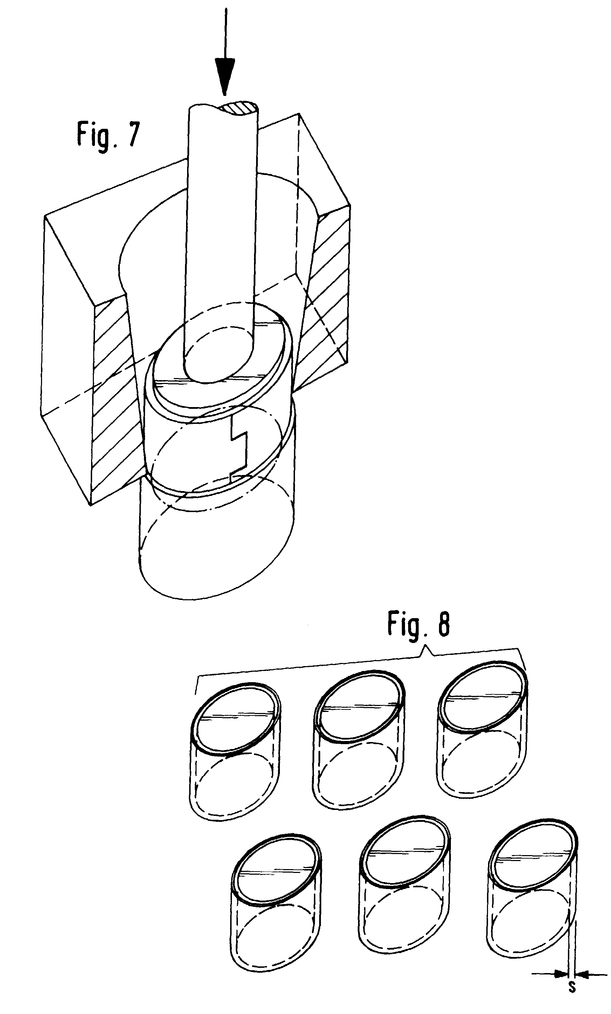

Für eine Endmontage eines Rohrmoduls gem. Fig. 8 wird die individuelle Kennung 5 durch einen Leseautomaten 7 gem. Fig. 3 gelesen und einer Kalibrierpresse automatisch eingegeben, oder es wird die Kalibrierpresse durch eine Bedienungsperson entsprechend den Daten des Monoliths eingestellt. Die Bedienungsperson wählt z.B. den Monolithdaten (mit Aufmaß) entsprechende feste Kalibrierdorne 6 aus, welche ein Aufkalibrieren eines vorgefertigten Rohrs 4 gem. Fig. 6 ermöglichen, so daß beim Fertigmodul gem. Fig. 8 ein konstanter Abstand bzw. Spalt s auf dem gesamten Umfang des Moduls entsteht, welcher von der Quellmatte 3 eingenommen wird.

Es werden also die vorgefertigten Rohre 4 entsprechend dem abgelesenen Monolithmaß und der Spaltvorgabe gem. Fig. 6 aufkalibriert. In das aufkalibrierte Rohr wird dann der mit der Quellmatte 3 umwickelte Monolith 2 gem. Fig. 7 in der Kalibrierpresse eingeschoben.

Nach dem beschriebenen Fertigungsverfahren entstehen mithin Rohrmodule gem. Fig. 8, die exakt den gewünschten Spalt s haben.

Vorstehendes Fertigungsverfahren beschreibt die Erfindung grundsätzlich.

Weitere Varianten ergeben sich z.B. bei der Herstellung eines Mehrbett-Katalysators durch Umwicklung mehrerer, axial ausgerichteter, voneinander beabstandeter Monolithe 2 mit einer einzigen Quellmatte 3, welche gem. Fig. 7 in ein einziges aufkalibriertes Rohr von einer Axialseite her eingepresst werden, wobei der stirnseitige Axialabstand zwischen den Monolithen durch Drahtgewebe, Blechringe oder Keramikringe eingerichtet wird.

Auch können von beiden Axialseiten eines aufkalibrierten Rohres her jeweils Monolithe mit umwickelter Quellmatte eingepreßt werden.

## Patentansprüche

1. Verfahren zur Herstellung von Katalysatoren, insbesondere Mittelstücken (1) von Kraftfahrzeug-Katalysatoren in Modulbauweise, durch Einschieben von Monolithen (2) und umgebendem Lagermantel (3) in vorgefertigte Rohre (4), welche im Querschnitt im wesentlichen das Monolithprofil plus Aufmaß für den Lagermantel (3) aufweisen, wobei die Anpassung der Rohrmaße auf einen konstanten Spalt (s) zum Monolith (2) durch Aufkalibrieren der im Querschnitt kleiner vorgefertigten Rohre (4) erfolgt und zur Anpassung der Rohrmaße die Monolithmaße aus der bei der Monolithherstellung zur Qualitätssicherung vorgenommenen Vermessung übernommen werden.

2. Verfahren nach Anspruch 1,
**dadurch gekennzeichnet,**
daß die Monolithmaße als sicht- und/oder registrierbare individuelle Kennung (5) auf den einzelnen Monolithen (2) aufgebracht werden (Fig. 2).

3. Verfahren nach Anspruch 2,
**dadurch gekennzeichnet,**
daß die individuelle Kennung (5) am Monolith auf einer nicht beschichteten äußeren Umfangsfläche erfolgt.

4. Verfahren nach Anspruch 2,
**dadurch gekennzeichnet,**
daß die individuelle Kennung (5) am stirnseitigen Eintritt oder am Umfang des Monolithkörpers eingefräst wird, wobei die Kennung deutlich tiefer als die Stärke der Beschichtung (washcoat, Edelmetall) ist.

5. Verfahren nach einem der Ansprüche 2 bis 4,
**dadurch gekennzeichnet,**
daß die individuelle Kennung (5) als Strichcode oder als frei wählbarer Code aufgestempelt oder mit einem Laser eingebrannt wird.

6. Verfahren nach einem der Ansprüche 2 bis 5,
**dadurch gekennzeichnet,**
daß die individuelle Kennung (5) automatisch abgelesen wird (Fig. 3).

7. Verfahren nach einem der Ansprüche 2 bis 6,
**dadurch gekennzeichnet,**
die individuelle Kennung (5) automatisch einer Kalibrierpresse eingegeben und in dieser verarbeitet wird.

8. Verfahren nach einem der Ansprüche 1 bis 7,
**dadurch gekennzeichnet,**
daß das Aufkalibrieren der Rohre (4) durch einstellbare Kalibrierdorne erfolgt.

9. Verfahren nach einem der Ansprüche 1 bis 7,
**dadurch gekennzeichnet,**
daß das Aufkalibrieren der Rohre (4) mit festen Kalibrierdornen (6) erfolgt und hierzu die Monolithmaße in insbesondere drei Größenklassen eingeordnet und die zugehörigen Kalibrierdorne jeweils in die Kalibrierpresse eingesetzt werden.

10. Verfahren nach einem der Ansprüche 1 bis 9,
**dadurch gekennzeichnet,**
daß eine Monolithform-Abweichung durch entsprechendes unsymmetrisches Kalibrieren am Rohr(gehäuse) nachgeführt wird.

11. Verfahren nach einem der Ansprüche 1 bis 10,
**dadurch gekennzeichnet,**
daß der Lagermantel (3) eine Quellmatte ist.

12. Verfahren nach einem der Ansprüche 1 bis 10,
**dadurch gekennzeichnet,**
daß der Lagermantel (3) ein Drahtgestrick ist.

13. Verfahren nach einem der Ansprüche 1 bis 10,
**dadurch gekennzeichnet,**
daß der Lagermantel (3) eine keramische Fasermatte ist.

14. Verfahren nach einem der Ansprüche 1 bis 10,
**dadurch gekennzeichnet,**
daß der Lagermantel (3) aus einer Quarzglasfasermatte besteht.

## Claims

1. Method of manufacturing catalytic converters, especially middle sections (1) of motor-vehicle catalytic converters in modular construction, by pushing monoliths (2) and a surrounding shell (3) into prefabricated tubes (4), which in cross section have essentially the monolith profile plus an allowance for the shell (3), the adaptation of the tube dimensions to a constant gap (s) with respect to the monolith (2) taking place by calibrating up the tubes (4) prefabricated with a smaller cross section and, for the adaptation of the tube dimensions, the monolith dimensions being taken over from the measurement performed during monolith manufacture for quality assurance.

2. Method according to Claim 1, characterized in that the monolith dimensions are applied to the individual monolith (2) as a visible and/or registrable individual marking (5) (Figure 2).

3. Method according to Claim 2, characterized in that the individual marking (5) is made on the monolith on an uncoated outer peripheral surface.

4. Method according to Claim 2, characterized in that the individual marking (5) is milled in on the inlet at the end or on the periphery of the monolith body, the marking being significantly deeper than the thickness of the coating (washcoat, noble metal).

5. Method according to one of Claims 2 to 4, characterized in that the individual marking (5) is stamped on or burnt in by a laser as a bar code or as a freely selectable code.

6. Method according to one of Claims 2 to 5, characterized in that the individual marking (5) is automatically read off (Figure 3).

7. Method according to one of Claims 2 to 6, characterized in that the individual marking (5) is automatically entered in a calibrating press and processed in the latter.

8. Method according to one of Claims 1 to 7, characterized in that the calibrating up of the tubes (4) is performed by adjustable calibrating mandrels.

9. Method according to one of Claims 1 to 7, characterized in that the calibrating up of the tubes (4) is performed with fixed calibrating mandrels (6) and, for this purpose, the monolith dimensions are classified into size classes, especially three, and the associated calibrating mandrels are respectively fitted into the calibrating press.

10. Method according to one of Claims 1 to 9, characterized in that a deviation in the form of the monolith is corrected by corresponding unsymmetrical calibration on the tube (shell).

11. Method according to one of Claims 1 to 10, characterized in that the shell (3) is an expandable mat.

12. Method according to one of Claims 1 to 10, characterized in that the shell (3) is a wire mesh.

13. Method according to one of Claims 1 to 10, characterized in that the shell (3) is a ceramic fibre mat.

14. Method according to one of claims 1 to 10, characterized in that the shell (3) consists of a quartz glass fibre mat.

## Revendications

1. Procédé de fabrication de catalyseurs, en particulier de parties centrales (1) de catalyseurs de construction modulaire pour véhicules automobiles, comprenant l'insertion de monolithes (2) et d'enveloppes de support (3) qui les entourent dans des tubes (4) préfabriqués dont la section droite intérieure correspond essentiellement au profil du monolithe plus une surépaisseur pour l'enveloppe de support (3), procédé dans lequel on effectue l'adaptation des dimensions des tubes à une fente (s) constante entre le monolithe (2) et le tube au moyen d'un calibrage par élargissement des tubes (4), préfabriqués avec une section droite sous-dimensionnée, et, pour l'adaptation des dimensions des tubes, on reprend les dimensions des monolithes relevées lors de la fabrication des monolithes pour assurer la qualité.

2. Procédé selon la revendication 1, caractérisé en ce qu'on applique les dimensions des monolithes sous la forme d'un marquage individuel (5) visible et/ou enregistrable sur les différents monolithes (2) (figure 2).

3. Procédé selon la revendication 2, caractérisé en ce qu'on effectue le marquage individuel (5) du monolithe sur une surface périphérique extérieure, dépourvue de revêtement, du monolithe.

4. Procédé selon la revendication 2, caractérisé en ce qu'on effectue le marquage individuel (5) par fraisage à l'extrémité d'entrée ou à la périphérie du corps monolithique, de manière que la profondeur du marquage soit nettement plus grande que l'épaisseur d'un revêtement (couche de lavage ou "washcoat", métal noble).

5. Procédé selon une des revendications 2 à 4, caractérisé en ce qu'on applique le marquage individuel (5), sous la forme d'un code à barres ou d'un code pouvant être choisi librement, à l'aide d'un tampon ou par gravure au laser.

6. Procédé selon une des revendications 2 à 5, caractérisé en ce qu'il comprend la lecture automatique du marquage individuel (5) (figure 3).

7. Procédé selon une des revendications 2 à 6, caractérisé en ce qu'il comprend l'introduction automatique du marquage individuel (5) dans une presse à calibrer et le traitement du marquage dans cette presse.

8. Procédé selon une des revendications 1 à 7, caractérisé en ce qu'on produit le calibrage par élargissement des tubes (4) au moyen de mandrins de calibrage réglables.

9. Procédé selon une des revendications 1 à 7, caractérisé en ce qu'on produit le calibrage par élargissement des tubes (4) au moyen de mandrins de calibrage (6) fixes et, à cet effet, on classifie les dimensions des monolithes, en particulier en trois classes de grandeurs, et on installe chaque fois les mandrins de calibrage coordonnés dans la presse à calibrer.

10. Procédé selon une des revendications 1 à 9, caractérisé en ce qu'on compense un écart de forme d'un monolithe par un calibrage non symétrique correspondant du tube (du boîtier tubulaire).

11. Procédé selon une des revendications 1 à 10, caractérisé en ce que l'enveloppe de support (3) est un mat gonflant.

12. Procédé selon une des revendications 1 à 10, caractérisé en ce que l'enveloppe de support (3) est un treillis de fil métallique.

13. Procédé selon une des revendications 1 à 10, caractérisé en ce que l'enveloppe de support (3) est un mat de fibres céramiques.

14. Procédé selon une des revendications 1 à 10, caractérisé en ce que l'enveloppe de support (3) est formée d'un mat de fibres de verre quartzeux.
